# EUROPEAN PATENT SPECIFICATION

(11) **EP 4 343 272 B1**
(45) Date of publication and mention of the grant of the patent: **06.11.2024**
(21) Application number: 22196474.5
(22) Date of filing: 20.09.2022
(51) Int. Cl.: G01B 11/00, G01B 11/26, G01C 15/06, G01S 17/42

(54) **SENSOR WITH CURVED REFLECTOR**
SENSOR MIT GEKRÜMMTEM REFLEKTOR
CAPTEUR À RÉFLECTEUR INCURVÉ

(43) Date of publication of application: 27.03.2024
(73) Proprietor: Hexagon Technology Center GmbH, 9435 Heerbrugg (CH)
(72) Inventor: JENSEN, Thomas, CH-9400 Rorschach (CH); YANG, Zheng, D-88046 Friedrichshafen (DE); STIGWALL, Johan, CH-9008 St. Gallen (CH)
(74) Representative: Kaminski Harmann

(56) References cited:
- US-A1- 2016 209 500
- US-A1- 2020 408 520
- US-B2- 10 082 521

## Description

The invention relates generally to a metrology system and a metrology instrument to provide accurate determination of the orientation of a target object.

In metrology it is a general object to determine geometrical properties such as coordinates, distances, and orientations of one or more target objects relative to a metrology device, wherein in most instances those properties have to be determined with respect to a known reference system, e.g. defined by one or more known reference points.

Methods and systems for measuring target coordinates are used in many applications, e.g. very precise measurements in geodesic applications, measurement problems in the field of building installation, or for controlling industrial processes.

Metrology instruments that are designed for continuously tracking a target point and coordinatively determining the position of this point can generally be combined under the term tracker or laser tracker, particularly in connection with industrial metrology. In this case, a target point may be represented by a retroreflective unit (e.g. corner cube prism) that is targeted using an optical measurement beam from the measuring instrument, particularly a laser beam. The laser beam is reflected back to the measuring apparatus in a parallel manner, the reflected beam being sensed using a sensing unit of the apparatus. In this context, an emission direction and a reception direction for the beam are ascertained, for example by means of sensors for angle measurement that are associated with a deflection mirror or a targeting unit of the system. In addition, with the sensing of the beam, a distance from the measuring apparatus to the target point is ascertained, e.g. by means of propagation time measurement or phase difference measurement.

In addition, laser trackers according to the prior art may be embodied with an optical image capture unit with a two dimensional, light-sensitive array, e.g. a CCD camera or a camera based on a CMOS array, or with a pixel array sensor and with an image processing unit. In this case, the laser tracker and the camera may be mounted in particular one on top of the other such that their positions relative to one another cannot be altered. Alternatively, the camera is arranged so as to be able to rotate together with the laser beam. The camera may be installed in an integrated design together with the laser optical system in a common housing.

With a capture and evaluation of an image - by means of an image capture and image processing unit - of what is known as an auxiliary measuring instrument (probe) with markings whose relative location with respect to one another is known, it is possible to deduce an orientation for the probe relative to the tracking unit. Together with the determined spatial position of the target point, it is thus possible to precisely determine the position and orientation of the object with six degrees of freedom (6DoF).

The probe can be embodied by what are known as a contact sensing tool or tactile probe that is positioned with its contact point on a point of an object to be measured. The contact sensing tool has markings, e.g. light points, and a reflector, which represents a target point on the contact sensing tool and can be targeted using the laser beam from the tracker, the positions of the markings and of the reflector relative to the contact point of the contact sensing tool being precisely known. In a manner known to a person skilled in the art, the probe may also be a scanner, for example a handheld scanner, equipped for distance measurement for contactless surface surveying operations. The direction and position of the scanner measurement beam used for the distance measurement relative to the light points and reflectors that are arranged on the scanner are precisely known. Such a scanner is described in EP 0 553 266, for example.

For distance measurement, laser trackers in the prior art have at least one distance measuring device, said distance measuring device typically being in the form of a laser interferometer, for example. Due to comparatively long coherence length and the measurement range permitted thereby, the interferometers used for distance measurement primarily comprise helium neon gas lasers (HeNe lasers) as light sources. Such is known from WO 2007/079600 A1 or from WO 2010/148525 A1, for example.

In further prior art, US 10 082 521 B2 discloses a laser tracker system for measuring six degrees of freedom. US 2020/408520 A1 discloses retroreflector arrangements for determining the positions of target points for industrial or geodetic surveying. US 2016/209500 A1 discloses a self-calibrating laser tracker and method.

For reflecting a measuring beam of a laser tracker, retroreflectors as known in the art are typically either provided as solid glass retroreflector prisms or as hollow corner cube retroreflectors.

For solid glass prisms, measuring the 3D position of the triple point of the solid glass prism is dependent on a measuring angle due to refraction in the glass. High-precision measurements of absolute positions for industrial measurement tasks are therefore difficult to accomplish using solid glass prisms. Solid glass prisms are therefore typically only used for monitoring applications for which it is sufficient to perform measurements of relative position changes.

Hollow prisms used as retroreflectors typically comprise three reflective surfaces, wherein incoming light is reflected back along the opposite direction with respect to an incoming direction. The reflection is in general provided through direct reflection at the three reflective surfaces of the hollow prism. An advantage of hollow prism retroreflectors over solid glass prism retroreflectors is that for hollow prism retroreflectors the back-reflecting of incoming light is not influenced by refraction. On the other hand, this also limits the usable angular range (field of view, FOV) of hollow prisms compared to glass prisms. The three reflective surfaces need, however, to be precisely orientated with respect to one another in order to avoid dihedral angle errors. It is furthermore important that the three reflective surfaces have a high degree of planarity. Hollow retroreflectors are also known as corner-cube retroreflectors.

Typical reflectors of above have to provide highly precise arrangement of their components in order to provide precise retro-reflecting properties. Therefore, fabrication of such reflectors is related to comparatively great effort. Furthermore, due to their designs, such reflectors comprise comparatively complex structures. Moreover, accuracy of such reflectors depends on (external) thermal conditions, since optical properties of the reflectors change with temperature.

It is therefore an object of the invention to provide a sensor device which provides accurate retro-reflecting properties while also providing improved structural setup, e.g. less complex.

A further object of the present invention is to provide a metrology system which provides more reliable measuring properties, in particular independent from thermal impacts.

These objects are achieved by the realisation of at least part of the characterising features of the independent claims. Features which further develop the invention in an alternative or advantageous manner can be found in some of the other features of the independent claims and in the dependent claims.

The idea of the present invention is to coaxially combine a retro-reflecting element having curved or spherically-shaped entrance and exit surfaces and a sensor unit, in particular also a relay optics, to provide distance measurement and orientation measurement simultaneously. Compact integration of both components in a single optical assembly offer an improved integration solution for e.g. tactile or optical probes which have to be tracked. The positioning of such an orientation sensor at the probe side makes angle measurement more resistant against air turbulence and the measurement uncertainty becomes distance independent. Thermal compensation can be solved by monitoring potential state variances (e.g. drift) of the optical components with a built-in reference assembly.

The invention relates to a sensor device which comprises a retro-reflecting element with a front boundary surface which provides for entry of measuring light into the retro-reflecting element and a back boundary surface configured for reflecting a first part of the measuring light as reflected measuring light and configured for transmitting a second part of the measuring light as transmitted measuring light. The front boundary surface and the back boundary surface are arranged on opposite sides of the retro-reflecting element. The retro-reflecting element may comprise one or more optical elements for manipulating propagation of measuring light in and/or at it boundary surfaces. The retro-reflecting element (also retro-reflector) provides reflection of one portion of incoming light in a direction parallel to the impinging direction and provides transmission of another portion of light through the retro-reflector. The transmitted portion can be used for further measurements, e.g. by detecting or determining an incidence direction or angle of the light.

The measuring light preferably is provided as collimated laser light, in particular emitted by a measuring device like a surveying device (e.g. total station or laser scanner) or a metrology device (e.g. laser tracker). The laser light may be of one particular wavelength, e.g. having a wavelength of the visible spectrum VIS (e.g. 633 nm) or of the infrared spectrum IR.

The sensor device also comprises a sensor unit configured and arranged so that the transmitted measuring light is detectable by the sensor unit. The sensor unit may comprise a respective detecting element or sensor. The sensor unit may comprise an array of detecting pixels in particular provided by a CCD- or a CMOS image sensor or a PSD position sensor. The sensor unit can preferably be embodied to provide image detection (image capturing) and to provide respective image data which can be processed, e.g. for deriving a particular positon in the image or on the sensor at which transmitted light impinges.

According to the invention, the front boundary surface and the back boundary surface are of curved shape and the retro-reflecting element is configured so that the measuring light which enters into the retro-reflecting element at the front boundary surface is focussed at (onto) the back boundary surface. In other words, the front and back boundary surfaces are curved. An incidence angle of the measuring light relative to the sensor device is equal to an exit angle of the reflected measuring light relative to the sensor device. This means, a part of the incoming light is retro-reflected (parallel).

Since there may be an offset between the incoming and the reflected measuring light, respective incidence and exit angles at the curved front boundary surface may be different. However, the incidence angle and the exit angel with respect to sensor device are equal. In other words, the directions of measuring light and reflected light are diametrical.

In one embodiment, the front boundary surface and the back boundary surface are of spherical shape. According to some embodiments, at least one of the boundary surfaces, the front and/or the back boundary surface may be spherically, ellipsoidally, paraboloidally or hyperboloidally formed.

According to an embodiment, the retro-reflecting element can comprise a sphere with a refraction index n, wherein 1.9 < n < 2.1, in particular wherein n = 2 or n ~ 2 (n being around 2; n being a function of lamda λ). In particular, the sphere provides the front boundary surface and the back boundary surface. The sphere is made of optical material which allows to manipulate propagation of the measuring light in a way so that the measuring light is focussed onto the (inner) back boundary surface by entering and passing through the sphere (e.g. by refraction).

In particular, the retro-reflecting element can be made of glass.

In one embodiment, the retro-reflecting element can comprise a coating which provides separation of the measuring light into the reflected measuring light and the transmitted measuring light, in particular a partially reflective coating. The coating may be a dielectric or metal coating. The coating can be provided on the back boundary surface of the retro-reflecting element. The coating can be designed to allow a defined percentage of the measuring light to pass the back boundary surface and to reflect another percentage of the measuring light. The coating may provide a particular dielectric mirror.

By means of such coating the amount of transmitted measuring light which arrives at the sensor unit can be defined and predetermined.

In some embodiments, the retro-reflecting element can comprise at least two optical elements, wherein the front boundary surface is provided by a first of the at least two optical elements and the back boundary surface is provided by a second of the at least two optical elements.

In particular, each of the at least two optical elements can have a refractive index (n) of n < 2.1 (n being the refractive index at the d-line λ = 587.6 nm). In general, values of refractive indices n mentioned in context of the present invention are preferably to be understood to be valid with reference to the d-line λ = 587.6 nm.

In particular, each of the at least two optical elements can comprise a centre point, in particular an optical or a geometric centre, and the at least two optical elements are arranged so that the centre points of the at least two optical elements coincide. In particular, the monocentric property are fulfilled, this means the centre points of the spherical surfaces of the optical elements coincide.

The plurality of optical elements of the retro-reflecting element can thus be built and combined for providing particular focussing characteristics in order to provide a focus of the measuring light at the back boundary surface. Particular shapes, materials and combinations of the elements can be adjusted to e.g. a particular wavelength of the measuring light and/or available space.

In one embodiment, the sensor unit can comprise a curved detecting element, in particular wherein the curved detecting element is (directly or with a defined gap) mounted at the back boundary surface. The curved detecting element can preferably comprise a radius of curvature which corresponds to the radius of curvature of the back boundary surface or which radius of curvature is slightly greater to provide optimised fitting. By mounting the curved detecting element on the back boundary surface, additional imaging optics can be avoided.

In one embodiment, the sensor device can comprise an imaging element, the imaging element is arranged between the retro-reflecting element and the sensor unit and provides directing of the transmitted measuring light towards the sensor unit. Such imaging element may preferably be arranged in an embodiment where the sensor unit comprises one single sensor chip (detecting element) of planar shape and the transmitted measuring light has to be directed to the sensor in a proper way to provide imaging of a region of interest of the back boundary surface.

A region of interest of the back boundary surface may be defined by a field-of-view to the sensor unit or the retro-reflecting element respectively. Measuring light directed to the retro-reflecting element within such field-of-view is directed to the back boundary surface and part of it is transmitted in order to be detected by the sensor unit.

In some embodiments, the sensor unit comprises a plurality of sensor elements, wherein each sensor element comprises a detecting element and an imaging optic assigned to the detecting element. The sensor elements are arranged relative to the back boundary surface so that a respective sensor element is assigned to a respective region of the back boundary surface, and a respective sensor element provides imaging of measuring light transmitted at its assigned region of the back boundary surface onto its detecting element. Here, an array of such sensor elements can be arranged to provide complete imaging of the region of interest of the back boundary surface. The sensor elements can be arranged so that there is no gap of imaging the back boundary surface.

Measuring light of a particular incidence angle is projected onto one of the sensor elements of the plurality of sensor elements as long as the incidence angle is within an aperture angle of the field-of-view.

In particular, at least one of the imaging optics of the sensor elements can comprise an imaging fibre optic taper and the assigned detecting element is directly mounted onto the imaging fibre optic taper. The imaging fibre optic taper provided particular imaging of the transmitted light onto the respective detecting element.

In some embodiments, the sensor device can comprise at least one referencing assembly with a marker and an illumination unit, wherein the marker is fixedly connected to the retro-reflecting element, in particular directly mounted onto the retro-reflecting element, and the illumination unit comprises a light source and is configured for illuminating the marker. Such arrangement provides for calibration of the sensor device e.g. in case of thermal impact which would result in structural changes (e.g. elongations) of optical elements. Such compensation is described in more detail below.

The marker can preferably be arranged at the back boundary surface of the retro-reflector.

According to one embodiments, the illumination unit can comprise an optical element, in particular a collimator, which is assigned to the light source and the illumination unit is arranged at the front boundary surface for illumination of the marker by illumination of the marker through the retro-reflecting element, i.e. the illumination light passes the retro-reflecting element.

In one embodiment, the illumination unit comprises a coupling optics, wherein the coupling optics is connected to the retro-reflecting element and provides coupling of illumination light into the retro-reflecting element, in particular wherein the coupling optics is embodied as a waveguide and provides coupling of the illumination light by the principle of whispering gallery coupling.

In one embodiment, the at least one referencing assembly is arranged and configured so that the marker is imageable onto the sensor unit by means of the illumination of the marker and an image of the marker is detectable by the sensor unit.

The marker may be provided at the retro-reflector by printing, etching, scratching, gluing or other proper techniques.

In some embodiments, for calibration of the sensor device, the marker can be illuminated by means of the illumination unit and an image of the marker is projected towards the sensor unit. An image of the marker is captured by the sensor unit. Based on the image, an image position of the marker in the image is derived. The image position can be compared with a (predefined) reference image position for the marker. Based thereon, a deviation between the image position of the marker and the reference image position can be determined. The deviation provides information about any changes in the optical system of the sensor device. In particular a scale or size of the marker image gives information about thermal expansions. Accordingly, based on the determined deviation, calibration data for the sensor device can be derived. The calibration data provides information about a state of at least the retro-reflecting element.

The invention also relates to a respective sensor calibration system. Such sensor calibration system may be provided by a measuring device or system, e.g. a surveying or metrology system, which comprises a sensor device of above. The sensor calibration system comprises a controlling and processing unit which comprises a calibrating functionality which is configured for:
- illuminating the marker by means of the illumination unit,
- capturing an image of the marker by means of the sensor unit,
- deriving an image position of the marker imaged onto the sensor unit,
- comparing the image position with a reference image position for the marker and determine a deviation between the image position of the marker and the reference image position, and
- based on the determined deviation, deriving calibration data for the sensor device, the calibration data provides information about a state of the retro-reflecting element.

The invention also relates to a measuring device, in particular comprising a total station, a laser tracker or a laser scanner for emitting measuring light and determining a position and orientation of a target, wherein the system in particular also comprises the target, e.g. a retro-reflector or an accessory device like a probe which comprises such retro-r reflector. The measuring device comprises a sensor device according to above and a controlling and processing unit.

The controlling and processing unit here comprises an orientation measuring functionality which is configured for
- capturing an image by means of the sensor unit, the image is preferably captured while measuring light hits the sensor device,
- processing the image,
- deriving an image position of the transmitted measuring light imaged onto the sensor unit, and
- based on the derived image position, computing the incidence angle of the measuring light at the front boundary surface, the incidence angle depends on an orientation of the measuring device relative to a propagation direction of the measuring light.

Since the position on the sensor unit onto which the transmitted measuring light is directed depends on the incidence angel of the measuring light, the orientation of the sensor device relative to a propagation axis (direction) of the measuring light can be determined by respective position-determination with respect to the impinging position of the transmitted light. The orientation can be determined in at least one, preferably two, rotational degrees of freedom (of the sensor device). In other words, the incident angle of the measuring light can be determined (calculated) as a function of the relative image position on the sensor unit which corresponds to the position onto which the transmitted measuring light is projected. The incident angle can be determined relative to a pitch axis and/or relative to an yaw axis of the sensor device, i.e. the two axes perpendicular to the optical axis of the sensor device.

The orientation of the sensor device concerning a third rotational degrees of freedom (roll angle) can be determined by polarisation analysis with a polarisation sensitive image sensor. In this context, reference is made to the respective disclosure of EP 3 627 101 B1.

Since a total station or a laser tracker comprise means for determining the propagation direction (axis) of the measuring light, an orientation of the sensor device can be determined relative to the total station or the laser tracker, respectively.

The inventive aspects are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: illustrates a metrology system according to the invention;
- Fig. 2:: shows an exemplary embodiment of a sensor device according to the invention;
- Fig. 3:: shows light propagation and reflection in a retro-reflecting element according to the invention;
- Fig. 4:: shows an embodiment of a sensor device according to the invention;
- Fig. 5a-d:: show alternative embodiments of retro-reflecting elements of the sensor device according to the invention;
- Fig. 6a-c:: show alternative embodiments of sensor devices according to the invention; and
- Fig. 7a-d:: show further embodiments of sensor devices according to the invention.

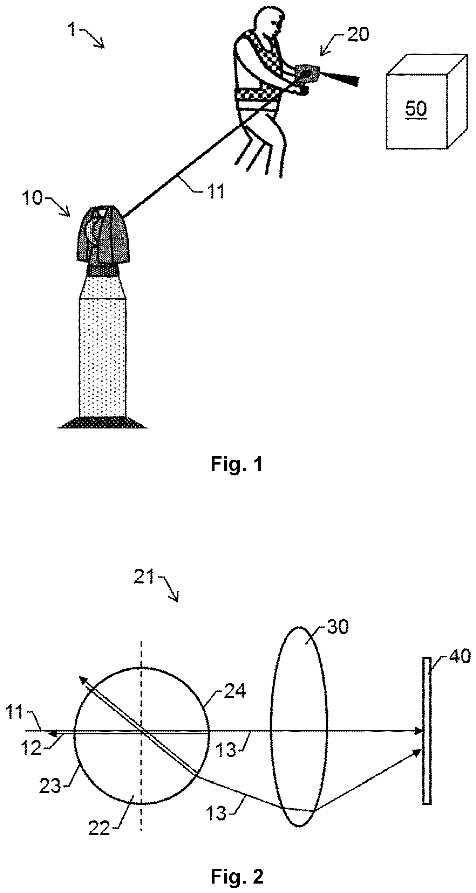

**Figure 1** exemplarily illustrates a metrology system 1 according to the invention. The figure shows an exemplary use case, e.g. measuring and quality control of a work piece 50 e.g. in industrial automobile or aircraft production.

A typical metrology measurement system for determining 3D coordinates of an object 50 comprises a coordinate measuring device 10 with tracking functionality, in the following also referred to as a laser tracker, configured to automatically track a movable accessory device 20 and to generate coordinate measuring data indicative of the position, and often also the orientation, of the movable accessory device. For example, the tracking capability of the tracker may be provided by at least one of a video tracking unit, a radio frequency tracking unit, and by optical tracking based on emitting a tracking beam towards a cooperative target.

The movable accessory device 20 is configured for scanning the object 50, e.g. by means of tactile scanning, and/or laser based scanning, and/or camera based scanning, and/or the movable accessory device is configured for carrying out an intervention on the object 50, e.g. for manufacturing and/or marking the object 50. For example, the movable accessory device 20 may be embodied as scanning device configured to approach the object and to carry out a coordinate measurement itself, e.g. wherein the mobile accessory device is a hand-held scanner 20. Alternatively, the device may be a tactile probing or scanning device, an articulated arm robot, an x-ray inspection device, or a stereo imaging device. The mobile accessory device may also be a marking device for marking the object or a tool and/or manufacturing instrument. Furthermore, the accessory device can also be a further laser tracker, e.g. a laser tracker configured to have a scanning functionality.

Metrology systems are often configured so that coordinate measuring data of accessory devices are typically referenceable to the coordinate system of one of the coordinate measuring devices, e.g. one of the fixed laser trackers, or to an outer coordinate system of a group of coordinate measuring devices.

By way of example, the movable accessory device 20 is embodied as a handheld scanner configured to emit a local scanning beam in order to scan the object surface in a local coordinate system, wherein the position of the handheld scanner 20 is tracked and measured by the laser tracker 10, and the measuring points of the handheld scanner 20, typically coordinate measuring data in a local coordinate system, are referencable to the coordinate system of the laser tracker 10.

Both the movable accessory device 20 and the tracker 10 may also be mounted to a robot, e.g. a UGV 6 ("unmanned ground vehicle") carrying a tracker 10 or a UAV ("unmanned aerial vehicle") carrying a sensor device 22 and providing the movable accessory device 20.

By way of example, the tracker is embodied as an industrial laser tracker 10, which provides for high-precise coordinate measuring and tracking of a cooperative target at the probe 20, e.g. a passive reflecting unit with defined reflecting properties such as a steel sphere of known dimensions or a retro-reflecting unit such as a corner cube prism, wherein at least parts of a laser beam emitted by the laser tracker 10 are reflected back, e.g. in parallel, to the laser tracker. Alternatively, the cooperative target may be an active unit emitting radiation having defined emission properties and/or according to a defined radiation pattern, e.g. provided by one or multiple laser diodes or LEDs, which is identified by the tracking unit of the coordinate measuring device. In other words: In the context of the present application, the term "cooperative target" relates to a target specifically foreseen to be used in conjunction with a tracking unit in order to enable generation of a tracking signal. Thus, the cooperative target "cooperates" with the tracking unit in that it has at least one of distinct reflection properties, distinct emission properties, a known shape, and known dimensions.

The basic structure of a typical laser tracker 10 comprises an opto-electronic distance meter to determine a distance to an object based on a laser measuring beam 11 (measuring light), wherein the aiming direction of the laser measuring beam 11 can be varied in a motorized movement, e.g. with respect to one or more independent spatial directions.

Opto-electronic laser distance meters have now become standard solutions in many areas, wherein various principles and methods are known in the field of electronic or electro-optical distance measurement. One approach is to use an interferometric distance measuring principle, particularly an absolute (i.e. frequency scanning) interferometry method, a frequency modulated continuous wave method (FMCW, particularly C-FMCW), the Fizeau principle, and/or a frequency comb principle.

Furthermore, the laser tracker 10 comprises a tracking unit for providing an automatic adjustment of the aiming direction of the laser measuring beam 11 such that the measuring beam 11 is continuously tracking a target point, wherein a direction of the emission of the laser measuring beam 11 is determined by means of sensors for angle measurement, e.g. angle encoders. As tracking sensor, a position-sensitive detector (PSD) may be used, e.g. an area sensor which functions in an analogue manner with respect to position, with the aid of which a centroid of a light distribution on the sensor surface can be determined.

The movable accessory device 20 comprises a cooperative target embodied as a sensor device according to the present invention.

**Figure 2** shows an exemplary embodiment of a sensor device 21 according to the present invention. The sensor device 21 comprises a retro-reflecting element 22 with a front boundary surface 23 and a back boundary surface 24 being of curved shapes. In the shown embodiment the retro-reflecting element 22 is a sphere made of glass with a refractive index n of 2 (n ~ 2), which is also called an N2 sphere. The sensor device 21 here also comprises an imaging element 30 which is embodied as a lens and a sensor unit 40, e.g. an imaging sensor (CMOS or CCD) or a PSD.

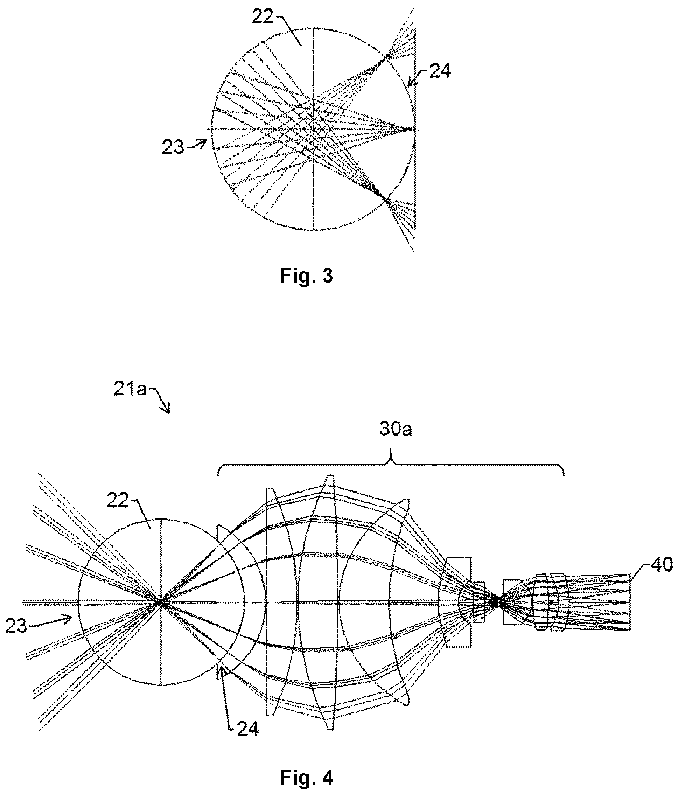

The N2 sphere 22 can provide to concentrically image incoming (collimated) measuring light 11 at the sphere backside 24 (back boundary surface), also shown in **figure 3****,** and produce a cat-eye reflex as retro reflection. The N2 sphere 22 can provide to focus the measuring light. In other words, the retro-reflecting element 22 is configured so that the measuring light 11, which enters into the retro-reflecting element on the front boundary surface, is focussed onto/at the back boundary surface 24. The incidence angle of the measuring light 11 at the sensor device 21 is equal to an exit angle of the reflected measuring light 12 reflected by means of the retro-reflecting element 22. The reflected measuring light 12 can be used for determining a distance between the sensor device 21 (or the accessory device 20) and a surveying instrument (e.g. laser tracker 10).

The retro-reflecting N2 sphere 22 comprises a dielectric or metal coating at least on the back boundary surface 24 for providing a portion of reflected measuring light 11 and a portion of transmitted measuring light 13 which passes the backside of the sphere (e.g. 1% transmission). The transmitted light can be exploited for angle measurement, in particular for determining the incidence angle. The imaging element may provide a relay optic having a wide-angle hypercentric lens objective located coaxially behind the N2 sphere 22. Such lens objective 30 can be configured to focus the transmitted measuring light 13 on a camera chip of the sensor unit 40. The curved back surface of the N2 sphere (with a curvature centre at the left side) is imaged onto a planar image plan (of the sensor unit 40). This is a big challenge for the optical design, as significantly greater field curvature has to be corrected compared to plane to plane imaging. A design of a respective imaging element 30a is shown in figure 4.

By that the transmitted measuring light 13 is directed to the sensor unit 40 and impinges on its detecting surface. A sensor coordinate for the impinging (transmitted) measuring light can be derived, e.g. a pixel coordinate or an image position. The sensor device 21, in particular by means of a respective processing unit, can be configured to inversely calculate the direction vector of the incoming measuring light 11, e.g. using an intrinsic camera model, from the pixel coordinate of the focus spot.

By that, a yaw-angle and a pitch-angle relative to a propagation direction of the measuring light can be calculated for the sensor device 21. Such calculation can be provided with reference to a coordinate system of a measuring device (e.g. laser tracker), in particular with reference to the direction vector of the measuring light. In particular, a respective pitch axis and a respective yaw axis are both oriented perpendicular to an optical axis of the sensor device 21 and perpendicular to each other. The optical axis of the sensor device 21 can preferably be defined by the arrangement of the retro-reflecting element 22, the lens objective 30 and the sensor unit 40.

**Figure 3** exemplary shows light propagation and reflection in a retro-reflecting element 22 according to the invention. The incoming measuring light is refracted at the front boundary surface 23 and propagates straight through the body so that the measuring light is focussed on the back boundary surface 24 of the retro-reflecting element 22. Such focussing is provided by having a refraction index of 2 of the material which the retro-reflecting element 22 is built from, e.g. glass. As for example, the measuring light has a wavelength of 633 nm. With such combination, focussing as shown can be optimised.

In a further embodiment (not shown) the retro-reflecting element 22 can be embodied as a graded index sphere (Luneburg lens). A typical Luneburg lens's refractive index n decreases radially from the centre to the outer surface of the sphere. The refractive index typically creates two conjugate foci outside of the lens. Accordingly, one focal point lies at infinity, and the other on the opposite surface of the lens. By metallizing parts of its surface, a Luneburg lens can also provide retro-reflecting properties.**Figure 4** shows an embodiment of a sensor device 21a according to the invention with an imaging element 30a comprising a number of optical elements in order to provide proper imaging of the measuring light onto the sensor unit 40. The optical system 30a provides compensation of the strongly curved focus plane at the backside 24 of the N2 sphere 22 on the camera chip of the sensor unit 40. The spherical object plane is imaged to a flat image plane (at the sensor). The optical system 30a is hypercentric at the object side, i.e. the chief rays go divergently through the first surface of the lens.

The imaging element 30a comprises eight spherical lenses and one aspherical lens. Pupil aberration is minimized so that one can use conventional pinhole model to calibrate the camera. According the shown example, the spot size is minimized to rms < 16 µm at F5.6, while distortion < 6% is achieved. The field curvature of N2 sphere 22 is corrected as well. To enable even more precise measurements, a diffractive optical element can be added in the aperture plane to generate a multi-dot pattern which allows averaging to reduce noise.

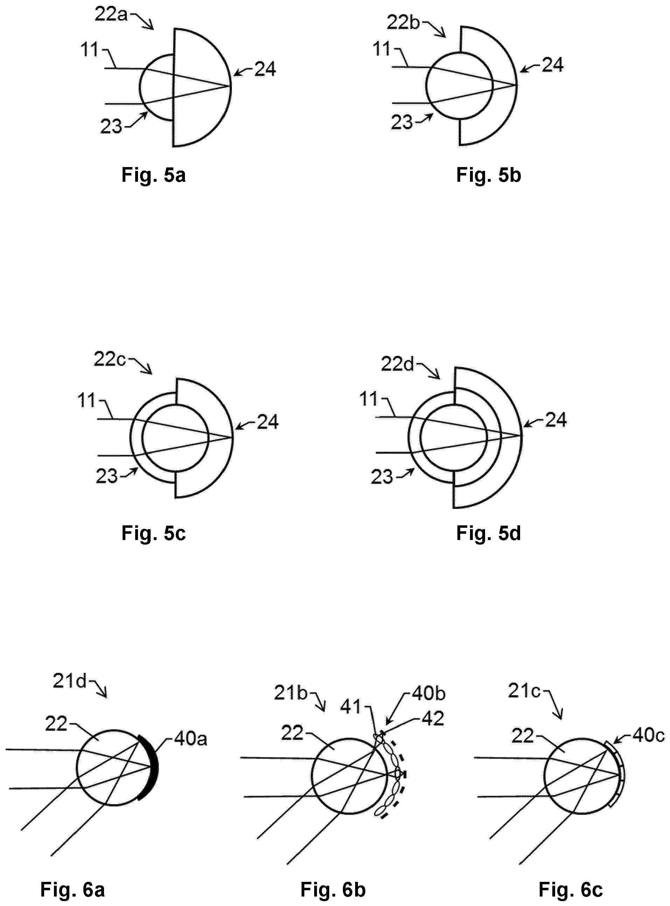

**Figures 5a** - **5d** show alternative embodiments of retro-reflecting elements of the sensor device according to the invention. In contrast to the retro-reflecting element of the figures 1 to 4 the retro-reflecting elements 22a - 22d shown here comprise at least two optical elements. Each of the optical elements provides a refractive index of smaller than 2, i.e. n < 2.

The retro-reflecting elements 22a - 22d have in common that measuring light which enters the reflector is focussed on the backside (back boundary surface) and the boundary surfaces are curved. The particular designs provide proper light guidance for particular applications. As for example, when measuring light of a particular wavelength is used, a particular reflector design can be chosen in order to provide optimised focussing of the light and by that providing precise retro-reflection of the light.

In addition, an intermediate layer can be provided between particular optical elements in order to further improve imaging and/or focussing of the measuring light.

In some embodiments, the two optical elements can be arranged so that the centre points of the two optical elements coincide. The centre points may in particular be optical or a geometric centres of the optical elements.

**Figure 5a** shows a retro-reflecting elements 22a with a combination of two half-spheres. The spheres may be cemented or agglutinated.

**Figure 5b** shows a retro-reflecting element 22b comprising a central spherical body and a further optical element having a half-shell shape and being mounted on (cemented or glued) the central spherical body.

**Figure 5c** shows a retro-reflecting elements 22c which comprises three optical elements, one of which being centrally arranged and the other two elements being of half-shell shapes and being mounted on (cemented or glued) the central body on opposite sides. One of the further optical elements comprises less thickness compared to the other.

**Figure 5d** shows a retro-reflecting elements 22d which comprises four optical elements, one of which being spherical and centrally arranged and the other three elements being of half-shell shapes. Two of the half-shells being mounted on (cemented or glued) the central spherical body on opposite sides. A third half-shell being mounted on another of the half-shells, preferably to the one half-shell which is glued to the back boundary surface of the centrally arranged sphere. Thicknesses of the half-shells may be different. Moreover, the glass materials may be different in refractive index and abbe number.

**Figures 6a** - **6c** show alternative embodiments of sensor devices 21b - 21d according to the invention. As for example, the retro-reflecting element 22 comprises one spherical body having a refractive index of 2. However, it is to be understood that a retro-reflecting element according 22a - 22d according to any of the figures 5a - 5d may alternatively be arranged.

**Figure 6a** shows a sensor device 21d which comprises a retro-reflecting element 22 and a sensor unit. The sensor unit comprises single curved sensor element 40a which is arranged at the back boundary surface of the sensor devices 21d. The sensor element 40a is preferably directly mounted onto the back boundary surface of the sensor devices 21d but may alternatively be arranged contactless. An advantage of such design is that additional imaging optics to image the transmitted measuring light onto the sensor can be avoided and the transmitted measuring light can directly be detected by the curved sensor. In other words, a position at the back boundary surface of the sensor devices 21d at which the measuring light is focused can directly be determined based on a respective sensor positon at which the light impinges on the sensor.

**Figure 6b** shows a sensor device 21b which comprises a retro-reflecting element 22 and a sensor unit having a plurality of sensor elements 40b, wherein each sensor element 40b comprises a detecting element 42 and an imaging optic 41 assigned to the detecting element 42. The sensor elements 40b are arranged circumferentially relative to the retro-reflecting element 22 behind its back boundary surface. The sensor elements 40b are arranged so that each of the elements 40b provides imaging and detecting of measuring light transmitted at a particular region of the back boundary surface. The sensor elements 40b are preferably arranged so that the particular regions to be imaged onto the detecting elements 42 are without any gaps in between.

In other words, the sensor unit comprises an array of single relay optics 41 and planar camera chip 42 which in total provide directing and detecting of measuring light transmitted through the back boundary surface.

**Figure 6c** shows a sensor device 21c which comprises a retro-reflecting element 22 and a sensor unit having a plurality of sensor elements 40c, wherein each sensor element 40c comprises a detecting element and a fibre optic for guiding the transmitted measuring light to the detecting element. Preferably, the detecting elements are directly mounted onto the assigned fibre optics. The fibre optics can be embodied as imaging fibre optic tapers.

In other words, the sensor unit can comprise an array of imaging fibre optic tapers and planar camera chip (flat detecting element) which in total provide directing and detecting of measuring light transmitted through the back boundary surface without any gaps. In particular, the front surface of each sensor elements 40c has curved surface with same curvature radius as the back surface of the retro-reflecting element 22, while the back surface of each sensor elements 40c is flat.

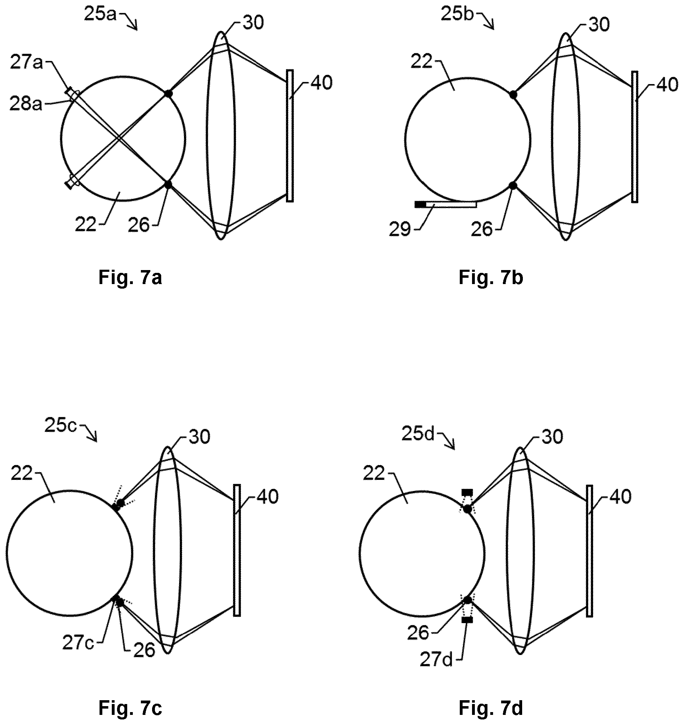

**Figures 7a - 7d** show alternative embodiments of sensor devices 25a - 25d according to the invention. The sensor devices 25a - 25d comprise a retro-reflecting element 22, an imaging element 30 and a sensor unit 40. As for example, the retro-reflecting element 22 comprises one spherical body having a refractive index of 2. However, it is to be understood that a retro-reflecting element according 22a - 22d according to any of the figures 5a - 5d may alternatively arranged. As for example, the imaging element 30 is shown to comprise one single hypercentric lens system (see e.g. figure 2). However, it is to be understood that the imaging element 30 may comprise additionally and/or alternatively further optical elements which provide directing of the transmitted measuring light towards the sensor unit 40 (see e.g. figure 4). As for example, the sensor unit 30 is provided as one single planar sensor element. However, it is to be understood that the sensor unit 30 and/or the sensor device may be embodied according to any one of the embodiments of figures 6a - 6c.

**Figure 7a** shows a sensor device 25a additionally comprising a marker 26 and an illumination unit having a light source 27a, in particular a LED, and an optical element 28a, here a collimator or focussing lens. The illumination unit is configured for illuminating the marker 26. The marker 26 and the illumination unit provide a referencing assembly. As shown, the sensor device 25a comprises multiple referencing assemblies. For better overview, description and reference signs are mainly provided for one of the referencing assemblies but also apply for the others shown.

The marker 26 can be illuminated by means of emitting illumination light from the LED 27a and collimating or focussing the light so that the collimated or focussed light is directed towards the marker. By that, an image of the marker can be detected by the sensor unit 40. The imaging element 30 provides respective imaging of the illuminated marker on the sensor unit 40.

In other words, the LED 27a is collimated and illuminates the markers through the centre of the reflector 22. The LED size and focal length of collimator can be chosen in such way that the illumination angle is larger than the imaging angle of the relay optics (imaging element 30) behind the reflector 22.

A detecting or imaging position on the sensor unit 40 can be derived based on the pixels illuminated by illuminating the marker. In other words, the sensor unit 40 can provide capturing an image and a position and/or size of the imaged marker in the captured image can be determined by (image) processing of the sensor data. The position and/or size of the imaged marker on the sensor unit 40 can be compared to a predetermined reference position or size for that particular marker. Based on such comparison a state of the sensor device can be derived. Such state may provide information about position or spatial deviation relative to a nominal condition of e.g. the retro-reflecting element 22. The deviation may result from thermal (temperature) change of the system or from other external impacts, like a shock.

The information provided by an approach of comparing a current marker position (which can be derived based on the image of the marker) with its reference position can be used for continuous calibration of the sensor device in order to provide a precise drift-free model of the optical system of the sensor device (also called camera model).

An accurate orientation measurement of an accessory device 20 by a coordinate measuring device 10 (see figure 1) requires an accurate calibration model of the arranged sensor device. As mentioned above, orientation measurement can be provided by determining the angel of incidence of impinging measuring light. This can be provided by detecting an impinging position of the transmitted measuring light on the sensor. The more precise one can compute, describe, or model light propagation through the sensor device, the more accurate a related measurement can be performed.

As for example, a deformation of glass and refractive index change caused by thermal change will give rise to parameter change in model which then would need to be recalibrated. To avoid such recalibration, a self-referencing method for thermal compensation is considered by using the marker as described above, e.g. placing the marker at the back side of the N2 sphere and homogeneously illuminating the marker with e.g. an LED ring. The scaling change of marker can be monitored simultaneously with orientation measurement and can be used as reference for thermal compensation.

As mentioned, the orientation (angle) measurement relies on model-based calculation. The accuracy of the camera model significantly influences the precision of the orientation (angle) measurement. If the ambient or sensor temperature changes, e.g. the focal length will change and can lead to a scaling error of angle measurement. There might be other higher order error as well. To compensate this temperature related effect - preferably in real time during the measurement - without recalibrating the sensor, the reference marker can be introduced, e.g. arranged at the boundary of measurement region of interest (e.g. field of view). A scaling and possible distortion of this markers can be monitored and used for real-time compensation. Through this concept, the sensor device can be (self-)referenced regarding thermal compensation, reducing the need for e.g. multi-temperature factory calibration.

**Figure 7b** shows an alternative embodiment of a sensor device 25b with a referencing assembly for calibration purpose of above. The referencing assembly of the sensor device 25b comprises a marker 26 and waveguide 29. The waveguide 29 comprises or is coupled to a light source. The waveguide 29 is connected to the retro-reflecting element 22 so that it provides coupling of illumination light into the retro-reflecting element by the principle of whispering gallery coupling. By that, the marker 26 gets illuminated and an image of the marker can be captured by the sensor unit 40.

Such design is advantageous if the light source should be placed away of the retro-reflecting element 22, e.g. for avoiding thermal coupling of the components and by that avoiding thermal impact on the reflecting element 22.

In order to place e.g. an LED further away from incoming measuring light path, the LED and a coupling optics like the waveguide or an optical fibre can be places at a side of the reflector 22. The LED and e.g. the waveguide 29 can be used to couple the light into the reflector 22 from the side.

The illumination light can be total reflected inside the reflector 22, in particular when the reflector 22 is embodied as a N2 sphere. By adjusting e.g. the coupling area and LED size a homogenous intensity distribution can be provided inside the sphere. The trapped light will then be scattered by marker 26 and imaged to the image sensor 40.

The wavelength of marker illumination light could be different than the (interferometer) wavelength of the measuring light. By that, band-pass coating can be implemented to prevent cross-talk between measurement signal and marker illumination. Using of different wavelength of course can also be applied by other approaches of marker detection described herein.

**Figure 7c** shows an alternative embodiment of a sensor device 25c with referencing assemblies for calibration purpose of above. A referencing assembly of the sensor device 25b comprises a marker 26 and an illumination unit having an LED 27c. The LED is attached in the backside of the reflector 22. The marker 26 may here be provided by a physical element attached to the LED an image of which can be projected on the sensor unit 40 or may be provided by particular optical properties which allow to unambiguously emit the illumination light towards the sensor unit 40 and which allow to determine an emitting position at the reflector by means of processing an image captured by the sensor unit 40.

As for example, multiple mini-LEDs can be directly attached at the rim of the backside of N2 sphere 22 to form active markers. This approach might reduce the integration complexity.

**Figure 7d** shows an alternative embodiment of a sensor device 25d with referencing assemblies for calibration purpose of above. A referencing assembly of the sensor device 25b comprises a marker 26 and an illumination unit 27d, e.g. comprising an LED. The marker 26 is attached to the backside of the reflector 22. The illumination unit 27d is arranged to illuminate the marker 26 in order to provide marker-scattered light which propagated to the sensor unit 40.

At the position of marker 26, the surface of the retro-reflecting element 22 can be roughened to provide diffusely reflection of the illumination light. The illumination unit 27d can be positioned at the side to generate indirect marker illumination.

Although the invention is illustrated above, partly with reference to some preferred embodiments, it must be understood that numerous modifications and combinations of different features of the embodiments can be made, as long as these modifications lie within the scope of the appended claims.

## Claims

1. Sensor device (21,21a-21d,25a-25d) comprising a
• a retro-reflecting element (22,22a-22d) having a front boundary surface (23) configured for entry of measuring light (11) into the retro-reflecting element (22,22a-22d) and a back boundary surface (24) configured for reflecting a first part of the measuring light as reflected measuring light (12) and configured for transmitting a second part of the measuring light as transmitted measuring light (13), wherein the front boundary surface (23) and the back boundary surface (24) are arranged on opposite sides of the retro-reflecting element (22,22a-22d), and
• a sensor unit (40) configured and arranged so that the transmitted measuring light (13) is detectable by the sensor unit (40),
**characterised in that**
• the front boundary surface (23) and the back boundary surface (24) are of curved shape,
• the retro-reflecting element (22,22a-22d) is configured so that the measuring light (11) entering into the retro-reflecting element at the front boundary surface (23) is focussed at the back boundary surface (24), and
• an incidence angle of the measuring light (11) relative to the sensor device (21,21a-21d,25a-25d) is equal to an exit angle of the reflected measuring light (12) relative to the sensor device (21,21a-21d,25a-25d).

2. Sensor device (21,21a-21d,25a-25d) according to claim 1,
**characterized in that**
the front boundary surface (23) and the back boundary surface (24) are of spherical shape.

3. Sensor device (21,21a-21d,25a-25d) according to claim 1 or 2,
**characterized in that**
the retro-reflecting element (22,22a-22d) comprises a sphere with a refraction index n of 1.9 < n < 2.1, in particular wherein n = 2.

4. Sensor device (21,21a-21d,25a-25d) according to any one of the preceding claims,
**characterized in that**
• the retro-reflecting element (22,22a-22d) is made of glass, and/or
• the retro-reflecting element (22,22a-22d) comprises a coating which provides separation of the measuring light (11) into the reflected measuring light (12) and the transmitted measuring light (13), in particular a partially reflective coating.

5. Sensor device (21,21a-21d,25a-25d) according to any one of the preceding claims,
**characterized in that**
the retro-reflecting element (22,22a-22d) comprises at least two optical elements, wherein the front boundary surface is provided by a first of the at least two optical elements and the back boundary surface is provided by a second of the at least two optical elements, in particular wherein each of the at least two optical elements has a refractive index n of n < 2.1.

6. Sensor device (21,21a-21d,25a-25d) according to claim 5,
**characterized in that**
each of the at least two optical elements has a centre point and the at least two optical elements are arranged so that the centre points of the at least two optical elements coincide.

7. Sensor device (21,21a-21d,25a-25d) according to any one of the preceding claims,
**characterized in that**
the sensor unit (40) comprises a curved detecting element (40a), in particular wherein the curved detecting element (40a) is mounted onto the back boundary surface (24).

8. Sensor device (21,21a-21d,25a-25d) according to any one of the preceding claims,
**characterized in that**
the sensor device (21,21a-21d,25a-25d) comprises an imaging element (30,30a), the imaging element (30,30a) is arranged between the retro-reflecting element (22,22a-22d) and the sensor unit (40) and provides directing of the transmitted measuring light (13) towards the sensor unit (40).

9. Sensor device (21,21a-21d,25a-25d) according to any one of the claims 1 to 7,
**characterized in that**
the sensor unit comprises a plurality of sensor elements (40b,40c), wherein each sensor element comprises a detecting element (42) and an imaging optic (41) assigned to the detecting element (42), wherein
• the sensor elements (40b,40c) are arranged relative to the back boundary surface so that a respective sensor element (40b,40c) is assigned to a respective region of the back boundary surface, and
• a respective sensor element (40b,40c) provides imaging of measuring light transmitted at its assigned region of the back boundary surface onto its detecting element (42),
in particular wherein at least one of the imaging optics comprises an imaging fibre optic taper and the assigned detecting element (40c) is directly mounted onto the imaging fibre optic taper.

10. Sensor device (21,21a-21d,25a-25d) according to any one of the preceding claims,
**characterized in that**
the sensor device (21,21a-21d,25a-25d) comprises at least one referencing assembly with a marker (26) and an illumination unit, wherein the marker (26) is fixedly connected to the retro-reflecting element (22,22a-22d), in particular directly mounted onto the retro-reflecting element, and the illumination unit comprises a light source (27a,27c, 27d,29) and is configured for illuminating the marker (26).

11. Sensor device (21,21a-21d,25a-25d) according to claim 10,
**characterized in that**
the marker (26) is arranged at the back boundary surface (24).

12. Sensor device (21,21a-21d,25a-25d) according to claim 10 or 11,
**characterized in that**
• the illumination unit comprises an optical element (28a) which is assigned to the light source (27a) and the illumination unit is arranged at the front boundary surface (23) for illumination of the marker by illumination of the marker through the retro-reflecting element (22,22a-22d), and/or
• the illumination unit comprises a coupling optics (29), wherein the coupling optics (29) is connected to the retro-reflecting element (22,22a-22d) and provides coupling of illumination light into the retro-reflecting element (22,22a-22d), in particular wherein the coupling optics is embodied as a waveguide and provides coupling of the illumination light by the principle of whispering gallery coupling.

13. Sensor device (21,21a-21d,25a-25d) according to any one of the claims 10 to 12,
**characterized in that**
the at least one referencing assembly is arranged and configured so that the marker (26) is imageable onto the sensor unit (40) by means of the illumination of the marker (26) and an image of the marker is detectable by the sensor unit (40).

14. Sensor calibration system comprising
• a sensor device (21,21a-21d,25a-25d) according to any one of the claims 10 to 13 and
• a controlling and processing unit,
**characterised in that**
the controlling and processing unit comprises a calibrating functionality which is configured for
• illuminating the marker (26) by means of the illumination unit,
• capturing an image of the marker by means of the sensor unit (40),
• deriving an image position of the marker imaged onto the sensor unit,
• comparing the image position with a reference image position for the marker and determine a deviation between the image position of the marker and the reference image position, and
• based on the determined deviation, deriving calibration data for the sensor device (21,21a-21d,25a-25d), the calibration data provides information about a state of the retro-reflecting element.

15. Measuring device (20) comprising
• a sensor device (21,21a-21d,25a-25d) according to any one of the claims 1 to 14 and
• a controlling and processing unit,
**characterised in that**
the controlling and processing unit comprises an orientation measuring functionality which is configured for
• capturing an image by means of the sensor unit,
• processing the image,
• deriving an image position of the transmitted measuring light (13) imaged onto the sensor unit,
• based on the derived image position, computing the incidence angle of the measuring light at the front boundary surface, the incidence angle depends on an orientation of the measuring device (20) relative to a propagation direction of the measuring light (11).

## Patentansprüche

1. Sensorvorrichtung (21, 21a-21d, 25a-25d), umfassend
• ein rückreflektierendes Element (22, 22a-22d), das eine vordere Begrenzungsfläche (23), die zum Eintritt von Messlicht (11) in das rückreflektierende Element (22, 22a-22d) konfiguriert ist, und eine hintere Begrenzungsfläche (24), die zum Reflektieren eines ersten Teils des Messlichts als reflektiertes Messlicht (12) konfiguriert ist und zum Übertragen eines zweiten Teils des Messlichts als übertragenes Messlicht (13) konfiguriert ist, aufweist, wobei die vordere Begrenzungsfläche (23) und die hintere Begrenzungsfläche (24) auf gegenüberliegenden Seiten des rückreflektierenden Elements (22, 22a-22d) angeordnet sind, und
• eine Sensoreinheit (40), die so konfiguriert und angeordnet ist, dass das übertragene Messlicht (13) durch die Sensoreinheit (40) erfassbar ist,
**dadurch gekennzeichnet, dass**
• die vordere Begrenzungsfläche (23) und die hintere Begrenzungsfläche (24) eine gekrümmte Form haben,
• das rückreflektierende Element (22, 22a-22d) so konfiguriert ist, dass das Messlicht (11), welches an der vorderen Begrenzungsfläche (23) in das rückreflektierende Element eintritt, an der hinteren Begrenzungsfläche (24) fokussiert wird, und
• ein Einfallswinkel des Messlichts (11) relativ zu der Sensorvorrichtung (21, 21a-21d, 25a-25d) gleich einem Austrittswinkel des reflektierten Messlichts (12) relativ zu der Sensorvorrichtung (21, 21a-21d, 25a-25d) ist.

2. Sensorvorrichtung (21, 21a-21d, 25a-25d) nach Anspruch 1,
**dadurch gekennzeichnet, dass**
die vordere Begrenzungsfläche (23) und die hintere Begrenzungsfläche (24) eine kugelförmige Form haben.

3. Sensorvorrichtung (21, 21a-21d, 25a-25d) nach Anspruch 1 oder 2,
**dadurch gekennzeichnet, dass**
das rückreflektierende Element (22, 22a-22d) eine Kugel mit einem Brechungsindex n von 1,9 < n < 2,1 umfasst, wobei insbesondere n = 2 ist.

4. Sensorvorrichtung (21, 21a-21d, 25a-25d) nach einem der vorhergehenden Ansprüche,
**dadurch gekennzeichnet, dass**
• das rückreflektierende Element (22, 22a-22d) aus Glas hergestellt ist und/oder
• das rückreflektierende Element (22, 22a-22d) eine Beschichtung umfasst, die eine Trennung des Messlichts (11) in das reflektierte Messlicht (12) und das übertragene Messlicht (13) bereitstellt, insbesondere eine teilweise reflektierende Beschichtung.

5. Sensorvorrichtung (21, 21a-21d, 25a-25d) nach einem der vorhergehenden Ansprüche,
**dadurch gekennzeichnet, dass**
das rückreflektierende Element (22, 22a-22d) mindestens zwei optische Elemente umfasst, wobei die vordere Begrenzungsfläche durch ein erstes der mindestens zwei optischen Elemente bereitgestellt wird und die hintere Begrenzungsfläche durch ein zweites der mindestens zwei optischen Elemente bereitgestellt wird, wobei insbesondere jedes der mindestens zwei optischen Elemente einen Brechungsindex n von n < 2,1 aufweist.

6. Sensorvorrichtung (21, 21a-21d, 25a-25d) nach Anspruch 5,
**dadurch gekennzeichnet, dass**
jedes der mindestens zwei optischen Elemente einen Mittelpunkt aufweist und die mindestens zwei optischen Elemente so angeordnet sind, dass die Mittelpunkte der mindestens zwei optischen Elemente zusammenfallen.

7. Sensorvorrichtung (21, 21a-21d, 25a-25d) nach einem der vorhergehenden Ansprüche,
**dadurch gekennzeichnet, dass**
die Sensoreinheit (40) ein gekrümmtes Erfassungselement (40a) umfasst, wobei das gekrümmte Erfassungselement (40a) insbesondere auf der hinteren Begrenzungsfläche (24) angebracht ist.

8. Sensorvorrichtung (21, 21a-21d, 25a-25d) nach einem der vorhergehenden Ansprüche,
**dadurch gekennzeichnet, dass**
die Sensorvorrichtung (21, 21a-21d, 25a-25d) ein Abbildungselement (30, 30a) umfasst, wobei das Abbildungselement (30, 30a) zwischen dem rückreflektierenden Element (22, 22a-22d) und der Sensoreinheit (40) angeordnet ist und Lenken des übertragenen Messlichts (13) in Richtung der Sensoreinheit (40) bereitstellt.

9. Sensorvorrichtung (21, 21a-21d, 25a-25d) nach einem der Ansprüche 1 bis 7,
**dadurch gekennzeichnet, dass**
die Sensoreinheit eine Vielzahl von Sensorelementen (40b, 40c) umfasst, wobei jedes Sensorelement ein Erfassungselement (42) und eine dem Erfassungselement (42) zugeordnete Abbildungsoptik (41) umfasst, wobei
• die Sensorelemente (40b, 40c) relativ zu der hinteren Begrenzungsfläche so angeordnet sind, dass ein jeweiliges Sensorelement (40b, 40c) einem jeweiligen Bereich der hinteren Begrenzungsfläche zugeordnet ist, und
• ein jeweiliges Sensorelement (40b, 40c) Abbilden des in dem ihm zugeordneten Bereich der hinteren Begrenzungsfläche übertragenen Messlichts auf seinem Erfassungselement (42) bereitstellt,
wobei insbesondere mindestens eine der Abbildungsoptiken eine Abbildungsfaseroptikverjüngung umfasst und das zugeordnete Erfassungselement (40c) direkt auf der Abbildungsfaseroptikverjüngung angebracht ist.

10. Sensorvorrichtung (21, 21a-21d, 25a-25d) nach einem der vorhergehenden Ansprüche,
**dadurch gekennzeichnet, dass**
die Sensorvorrichtung (21, 21a-21d, 25a-25d) mindestens eine Referenzierungsanordnung mit einem Marker (26) und einer Beleuchtungseinheit umfasst, wobei der Marker (26) fest mit dem rückreflektierenden Element (22, 22a-22d) verbunden ist, insbesondere direkt auf dem rückreflektierenden Element angebracht ist, und die Beleuchtungseinheit eine Lichtquelle (27a, 27c, 27d, 29) umfasst und zum Beleuchten des Markers (26) konfiguriert ist.

11. Sensorvorrichtung (21, 21a-21d, 25a-25d) nach Anspruch 10,
**dadurch gekennzeichnet, dass**
der Marker (26) an der hinteren Begrenzungsfläche (24) angeordnet ist.

12. Sensorvorrichtung (21, 21a-21d, 25a-25d) nach Anspruch 10 oder 11,
**dadurch gekennzeichnet, dass**
• die Beleuchtungseinheit ein optisches Element (28a) umfasst, das der Lichtquelle (27a) zugeordnet ist, und die Beleuchtungseinheit an der vorderen Begrenzungsfläche (23) zur Beleuchtung des Markers durch Beleuchtung des Markers durch das rückreflektierende Element (22, 22a-22d) angeordnet ist, und/oder
• die Beleuchtungseinheit eine Kopplungsoptik (29) umfasst, wobei die Kopplungsoptik (29) mit dem rückreflektierenden Element (22, 22a-22d) verbunden ist und Koppeln von Beleuchtungslicht in das rückreflektierende Element (22, 22a-22d) bereitstellt, wobei die Kopplungsoptik insbesondere als ein Wellenleiter ausgebildet ist und Koppeln des Beleuchtungslichts nach dem Prinzip der "Flüstergalerie"-Kopplung bereitstellt.

13. Sensorvorrichtung (21, 21a-21d, 25a-25d) nach einem der Ansprüche 10 bis 12,
**dadurch gekennzeichnet, dass**
die mindestens eine Referenzierungsanordnung so angeordnet und konfiguriert ist, dass der Marker (26) mittels Beleuchtung des Markers (26) auf der Sensoreinheit (40) abbildbar ist und ein Abbild des Markers durch die Sensoreinheit (40) erfassbar ist.

14. Sensorkalibrierungssystem, umfassend
• eine Sensorvorrichtung (21, 21a-21d, 25a-25d) nach einem der Ansprüche 10 bis 13 und
• eine Steuerungs- und Verarbeitungseinheit,
**dadurch gekennzeichnet, dass**
die Steuerungs- und Verarbeitungseinheit eine Kalibrierungsfunktion umfasst, die zu Folgendem konfiguriert ist:
• Beleuchten des Markers (26) mittels der Beleuchtungseinheit,
• Aufnehmen eines Bilds des Markers mittels der Sensoreinheit (40),
• Ableiten einer Bildposition des Markers, der auf der Sensoreinheit abgebildet ist,
• Vergleichen der Bildposition mit einer Referenzbildposition für den Marker und Bestimmen einer Abweichung zwischen der Bildposition des Markers und der Referenzbildposition, und
• basierend auf der bestimmten Abweichung, Ableiten von Kalibrierungsdaten für die Sensorvorrichtung (21, 21a-21d, 25a-25d), wobei die Kalibrierungsdaten Informationen über einen Zustand des rückreflektierenden Elements bereitstellen.

15. Messvorrichtung (20), umfassend
• eine Sensorvorrichtung (21, 21a-21d, 25a-25d) nach einem der Ansprüche 1 bis 14 und
• eine Steuerungs- und Verarbeitungseinheit,
**dadurch gekennzeichnet, dass**
die Steuerungs- und Verarbeitungseinheit eine Orientierungsmessfunktion umfasst, die zu Folgendem konfiguriert ist:
• Aufnehmen eines Bildes mittels der Sensoreinheit,
• Verarbeiten des Bildes,
• Ableiten einer Bildposition des auf der Sensoreinheit abgebildeten übertragenen Messlichts (13),
• basierend auf der abgeleiteten Bildposition, Berechnen des Einfallswinkels des Messlichts an der vorderen Begrenzungsfläche, wobei der Einfallswinkel von einer Ausrichtung der Messvorrichtung (20) relativ zu einer Ausbreitungsrichtung des Messlichts (11) abhängt.

## Revendications

1. Dispositif capteur (21, 21a-21d, 25a-25d) comprenant :
• un élément rétroréfléchissant (22, 22a-22d) ayant une surface limite avant (23) configurée pour l'entrée d'une lumière de mesure (11) dans l'élément rétroréfléchissant (22, 22a-22d) et une surface limite arrière (24) configurée pour réfléchir une première partie de la lumière de mesure en tant que lumière de mesure réfléchie (12) et configurée pour transmettre une deuxième partie de la lumière de mesure en tant que lumière de mesure transmise (13), la surface limite avant (23) et la surface limite arrière (24) étant disposées sur des côtés opposés de l'élément rétroréfléchissant (22, 22a-22d), et
• une unité de capteur (40) configurée et disposée de manière à ce que la lumière de mesure transmise (13) puisse être détectée par l'unité de capteur (40),
**caractérisé en ce que**
• la surface limite avant (23) et la surface limite arrière (24) sont de forme incurvée,
• l'élément rétroréfléchissant (22, 22a-22d) est configuré de manière à ce que la lumière de mesure (11) entrant dans l'élément rétroréfléchissant au niveau de la surface limite avant (23) soit focalisée sur la surface limite arrière (24), et
• un angle d'incidence de la lumière de mesure (11) par rapport au dispositif capteur (21, 21a-21d, 25a-25d) est égal à un angle de sortie de la lumière de mesure réfléchie (12) par rapport au dispositif capteur (21, 21a-21d, 25a-25d).

2. Dispositif capteur (21, 21a-21d, 25a-25d) selon la revendication 1,
**caractérisé en ce que**
la surface limite avant (23) et la surface limite arrière (24) sont de forme sphérique.

3. Dispositif capteur (21, 21a-21d, 25a-25d) selon la revendication 1 ou 2,
**caractérisé en ce que**
l'élément rétroréfléchissant (22, 22a-22d) comprend une sphère avec un indice de réfraction n tel que 1,9 < n < 2,1, en particulier dans lequel n = 2.

4. Dispositif capteur (21, 21a-21d, 25a-25d) selon l'une quelconque des revendications précédentes,
**caractérisé en ce que**
• l'élément rétroréfléchissant (22, 22a-22d) est en verre, et/ou
• l'élément rétroréfléchissant (22, 22a-22d) comprend un revêtement qui assure la séparation de la lumière de mesure (11) en lumière de mesure réfléchie (12) et en lumière de mesure transmise (13), en particulier un revêtement partiellement réfléchissant.

5. Dispositif capteur (21, 21a-21d, 25a-25d) selon l'une quelconque des revendications précédentes,
**caractérisé en ce que**
l'élément rétroréfléchissant (22, 22a-22d) comprend au moins deux éléments optiques, dans lequel la surface limite avant est fournie par un premier desdits au moins deux éléments optiques et la surface limite arrière est fournie par un deuxième desdits au moins deux éléments optiques, en particulier dans lequel chacun desdits au moins deux éléments optiques a un indice de réfraction n tel que n < 2,1.

6. Dispositif capteur (21, 21a-21d, 25a-25d) selon la revendication 5,
**caractérisé en ce que**
chacun desdits au moins deux éléments optiques a un point central et **en ce que** lesdits au moins deux éléments optiques sont disposés de manière à ce que les points centraux desdits au moins deux éléments optiques coïncident.

7. Dispositif capteur (21, 21a-21d, 25a-25d) selon l'une quelconque des revendications précédentes,
**caractérisé en ce que**
l'unité de capteur (40) comprend un élément capteur incurvé (40a), en particulier dans lequel l'élément capteur incurvé (40a) est monté sur la surface limite arrière (24).

8. Dispositif capteur (21, 21a-21d, 25a-25d) selon l'une quelconque des revendications précédentes,
**caractérisé en ce que**
le dispositif capteur (21, 21a-21d, 25a-25d) comprend un élément d'imagerie (30, 30a), l'élément d'imagerie (30, 30a) est disposé entre l'élément rétroréfléchissant (22, 22a-22d) et l'unité de capteur (40) et permet de diriger la lumière de mesure transmise (13) vers l'unité de capteur (40).

9. Dispositif capteur (21, 21a-21d, 25a-25d) selon l'une quelconque des revendications 1 à 7,
**caractérisé en ce que**
l'unité de capteur comprend une pluralité d'éléments capteurs (40b, 40c), dans lequel chaque élément capteur comprend un élément de détection (42) et une optique d'imagerie (41) assignée à l'élément de détection (42), dans lequel
• les éléments capteurs (40b, 40c) sont disposés par rapport à la surface limite arrière de manière à ce qu'un élément capteur respectif (40b, 40c) soit assigné à une région respective de la surface limite arrière, et
• un élément capteur respectif (40b, 40c) assure l'imagerie de la lumière de mesure transmise à sa région assignée de la surface limite arrière sur son élément de détection (42),
en particulier dans lequel au moins une des optiques d'imagerie comprend un cône de fibre optique imageur et l'élément de détection assigné (40c) est directement monté sur le cône de fibre optique imageur.

10. Dispositif capteur (21, 21a-21d, 25a-25d) selon l'une quelconque des revendications précédentes,
**caractérisé en ce que**
le dispositif capteur (21, 21a-21d, 25a-25d) comprend au moins un ensemble de référencement avec un repère (26) et une unité d'éclairage, dans lequel le repère (26) est relié de manière fixe à l'élément rétroréfléchissant (22, 22a-22d), en particulier monté directement sur l'élément rétroréfléchissant, et l'unité d'éclairage comprend une source de lumière (27a, 27c, 27d, 29) et est configurée pour éclairer le repère (26).

11. Dispositif capteur (21, 21a-21d, 25a-25d) selon la revendication 10,
**caractérisé en ce que**
le repère (26) est disposé sur la surface limite arrière (24).

12. Dispositif capteur (21, 21a-21d, 25a-25d) selon la revendication 10 ou 11, **caractérisé en ce que**
• l'unité d'éclairage comprend un élément optique (28a) qui est assigné à la source de lumière (27a) et l'unité d'éclairage est disposée sur la surface limite avant (23) pour l'éclairage du repère par l'éclairage du repère à travers l'élément rétroréfléchissant (22, 22a-22d), et/ou
• l'unité d'éclairage comprend une optique de couplage (29), dans lequel l'optique de couplage (29) est reliée à l'élément rétroréfléchissant (22, 22a-22d) et assure le couplage de la lumière d'éclairage dans l'élément rétroréfléchissant (22, 22a-22d), en particulier dans le cas où l'optique de couplage est réalisée sous la forme d'un guide d'ondes et assure le couplage de la lumière d'éclairage selon le principe du couplage par galerie de chuchotement.

13. Dispositif capteur (21, 21a-21d, 25a-25d) selon l'une quelconque des revendications 10 à 12,
**caractérisé en ce que**
ledit au moins un ensemble de référencement est disposé et configuré de manière à ce que le repère (26) puisse être imagé sur l'unité de capteur (40) au moyen de l'éclairage du repère (26) et qu'une image du repère puisse être détectée par l'unité de capteur (40).

14. Système d'étalonnage de capteur comprenant
• un dispositif capteur (21, 21a-21d, 25a-25d) selon l'une quelconque des revendications 10 à 13 et
• une unité de commande et de traitement,
**caractérisé en ce que**
l'unité de commande et de traitement comprend une fonctionnalité d'étalonnage configurée pour
• éclairer le repère (26) au moyen de l'unité d'éclairage,
• capturer une image du repère au moyen de l'unité de capteur (40),
• obtenir une position d'image du repère imagé sur l'unité de capteur,
• comparer la position d'image avec une position d'image de référence pour le repère et déterminer un écart entre la position d'image du repère et la position d'image de référence, et
• sur la base de l'écart déterminé, dériver des données d'étalonnage pour le dispositif capteur (21, 21a-21d, 25a-25d), les données d'étalonnage fournissant des informations sur l'état de l'élément rétroréfléchissant.

15. Dispositif de mesure (20) comprenant
• un dispositif capteur (21, 21a-21d, 25a-25d) selon l'une quelconque des revendications 1 à 14 et
• une unité de commande et de traitement,
**caractérisé en ce que**
l'unité de commande et de traitement comprend une fonctionnalité de mesure d'orientation configurée pour
• capturer une image au moyen de l'unité de capteur,
• traiter l'image,
• dériver une position d'image de la lumière de mesure transmise (13) imagée sur l'unité de capteur,
• sur la base de la position d'image dérivée, calculer l'angle d'incidence de la lumière de mesure sur la surface limite avant, l'angle d'incidence dépendant d'une orientation du dispositif de mesure (20) par rapport à une direction de propagation de la lumière de mesure (11).
